(19) Europäisches Patentamt
European Patent Office
Office européen des brevets

(11) Publication number: 0 239 973
A2

# (12) EUROPEAN PATENT APPLICATION

(21) Application number: 87104693.4

(22) Date of filing: 30.03.87

(51) Int. Cl.[3]: C 09 K 3/00
B 01 J 31/12, B 01 J 35/00
B 01 J 8/24, C 08 G 65/02

(30) Priority: 31.03.86 US 845986

(43) Date of publication of application:
07.10.87 Bulletin 87/41

(84) Designated Contracting States:
AT BE CH DE FR GB IT LI LU NL SE

(71) Applicant: UNION CARBIDE CORPORATION
39 Old Ridgebury Road
Danbury Connecticut 06817(US)

(72) Inventor: Reichle, Walter Thomas
158 Mountain Avenue
Warren, New Jersey 07069(US)

(74) Representative: Weinhold, Peter, Dr. et al,
Patentanwälte Dipl.-Ing. G. Dannenberg Dr. P. Weinhold
Dr. D. Gudel Dipl.-Ing. S. Schubert Dr. P. Barz
Siegfriedstrasse 8
D-8000 München 40(DE)

## (54) Catalyst and process for alkylene oxide polymerization.

(57) New catalysts, their production and use in alkylene oxide polymerization, provide improved polymers and enable broad variations in polymerization rates and productivities. These catalysts contain fine particle size dispersions of zinc alkyl- or aryloxides, high surface area dispersion aid, nonionic surfactant, in inert hydrocarbon medium.

EP 0 239 973 A2

Croydon Printing Company Ltd.

0239973

# CATALYST AND PROCESS FOR ALKYLENE OXIDE POLYMERIZATION

## Field of the Invention

This invention relates to the production of zinc alkoxide catalyst compositions, the catalyst per se and to the use of such catalysts for the polymerization of cyclic alkylene oxides at high rates to form high molecular weight polymers and copolymers.

## Description of the Prior Art

The polymerization of ethylene oxide and propylene oxide to produce high molecular weight polymers and copolymers has been known for a long time and the literature contains hundreds of references pertaining to this subject. The alkylene oxides have been polymerized using a wide variety of catalysts based on metal atoms including oxides and/or hydroxides of transition metals, such as iron, as well as main group metals, such as magnesium, aluminum, zinc and calcium. In some instances, as with calcium-based catalysts, the catalyst may be an ammonia-modified amide/metal alkoxide; however, such catalysts often leave the resulting polymer with an undesirable odor of ammonia and amine that is difficult to remove. Other catalysts suffer from various disadvantages such as difficulty of preparation, irreproducible polymerization rates, lack of molecular weight control, or, in some instances product instability of either the catalyst or the polymer.

The catalysts containing the zinc atom have been known for many years, but for various reasons they have not shown widespread commercial acceptance. Nevertheless continued efforts have been made to modify and improve them since the rates are not as high as desired in commercial operations, or the product is highly colored, as when porphyrin metal complexes are used as the catalyst. Illustrative of the information disclosed in the literature are the publications discussed below.

British Patent Specification 927,817, published June 8, 1963, assigned to Hercules Powder Company, discloses a catalyst obtained by reacting a dihyrocarbon zinc compound with a polyfunctional compound from the group water, nonaromatic polyols and polyhydric phenols. It nowhere discloses conducting the reaction in contact with a dispersion aid and a nonionic surfactant. The catalyst is used to polymerize alkylene oxides.

British Patent Specification 972,898, published October 21, 1964, assigned to Nippon Carbide Kogyo Kabushiki Kaisha, discloses a three-component catalyst system consisting of (a) an organozinc compound, (b) water and (c) an amine and its use in the polymerization of alkylene oxides. It does not disclose applicant's claimed catalyst dispersion composition.

British Patent Specification 983,814, published February 17, 1965, assigned to Takeda Chemical Industries, Ltd., discloses a catalyst for the polymerization of alkylene oxides. The catalyst is the reaction product of an organometallic

compound and a polyol, but nowhere does this reference disclose the use of a dispersion aid and nonionic surfactant to produce the catalyst dispersions of this application.

British Patent Specification 1,048,822, published November 23, 1966, assigned to Dunlop Rubber Company Limited, pertains to a catalyst that is the reaction product of a dialkylzinc and aluminum trioxide. This is not applicant's invention.

U.S. Patent No. 3,382,192, issued May 7, 1968 to Shun Kawamura et al. discloses a catalyst composition composed of a mixture of (a) alumina or silica and (b) a zinc alkoxide or aluminum alkoxide or the reaction product of a dialkylzinc or trialkylaluminum compound with water or an alkanol. It does not disclose or suggest the production of the catalyst dispersion claimed by applicant in this application.

U.S. Patent No. 3,399,150, issued August 27, 1968 to M. Miyoshi et al. polymerizes alkylene oxides with a catalyst composition comprising an organometallic compound, including the zinc compounds, and a carbonate or sulfate of a metal. Applicant's catalysts do not employ carbonates or sulfates.

In a series of published Japanese patent applications, the polymerizations of alkylene oxides with zinc compounds is disclosed. However, none of these discloses the production of a catalyst dispersion by reacting a dihydrocarbyl zinc compound with a diol in contact with a fumed metal oxide and

a nonionic surfactant as disclosed and claimed in this application. These Japanese patent publications include Japanese 37-18394 and Japanese 37-18395 that relate to the preparation of high molecular weight alkylene oxide polymers employing a catalyst comprised of powdered alumina and a metal (zinc, magnesium, aluminum) alkoxide. Japanese patent publication 38-11291 discloses the use of activated alumina, diethyl zinc and water as the polymerization catalyst. Japanese patent publication 38-26099 relates to the use of a two-component catalyst such as an organozinc compound and water or an alcohol or oxygen. Japanese patent publication 56-88421 relates to an alkylene oxide polymerization catalyst comprising an amorphous silica containing hydroxyl groups and an aluminum alkoxide. Japanese patent publication 54-13994 relates to a catalyst for condensation of carbon monoxide and an oxirane compound that consists of an organometallic compound (e.g., diethylzinc) and a polymer such as polyvinyl alcohol.

Ishimori et al. (Die Makromolekulare Chemie, Vol. 128 (1969) 52-62) disclosed the preparation of amorphous zinc dimethoxide by the reaction of diethylzinc with methanol and reported extremely high activity for propylene oxide polymerization. The authors make no mention of a catalyst dispersion produced in the presence of fumed silica and a nonionic surfactant.

In a second publication by Ishimori et al. (Die Makromolekulare Chemie, Vol. 120 (1968) 161-175), the catalyst activity and structure of

zinc alkoxides for propylene oxide polymerization was studied and their x-ray diffractions examined. It was observed that dimethoxyzinc and diethoxyzinc showed crystalline structures and were poor catalysts, whereas the methoxy ethoxyzinc showed an amorphous structure and it was a significantly better catalyst for the polymerization of propylene oxide. The article, however, does not disclose preparation of the catalysts in contact with fumed silica and a nonionic surfactant.

In an earlier article by Ishimori et al. (Kogyo Kagaku Zasshi, Vol. 70, No. 4 (1067) 548-552), the production of zinc dimethoxide and its use as a propylene oxide polymerization catalyst were discussed. Again there was no mention or suggestion of the use of fumed silica and nonionic surfactant in the preparation of the catalyst nor of the formation of a dispersion.

Japanese Patents 78-27319 and 45-07751 show the reaction of diethyl zinc with ethylene glycol to produce a catalyst useful for the polymerization of ethylene oxide. This work is discussed infra in Comparative Experiment A. The patents nowhere suggest or disclose use of fumed silica and a nonionic surfactant.

In Japanese Patent 42/5350, a complex of a metal compound $R_nMeX_{2-n}$ and a sulfur-containing compound is used as the catalyst. R is an organic group, Me is magnesium or zinc and X is hydroxyl, hydrogen or halogen.

Japanese Patent 42/02685 relates to the use of a three-component catalyst containing an

organozinc compound, an organomagnesium compound and water that is prepared in the presence of an ether or thioether.

Japanese Patent 43/002945 uses a catalyst comprised of a partial hydrolyzate of an aluminum alkoxide and an organic compound of a metal of Group 2 or 3 carried out in the presence of an amine.

Japanese Patent 43/004872 uses a mixture of an organomagnesium compound and an organomercury compound.

Japanese Patent 43/012826 has a three component system of an organozinc compound, an organomagnesium compound and water, the preparation and/or polymerization being conducted in the presence of an amine.

Japanese Patent 43/012827 is the same as Japan 43/012826 but requires the presence of ethers or thioethers or one or more amines.

Japanese Patent 43/012599 uses an organomagnesium compound and a nitrogen-containing compound to polymerize epoxides.

Japanese Patent 43/012598 produces the catalyst by reacting an organozinc compound with water in the presence of N,N-disubstituted aniline.

Japanese Patent 45/005784 relates to a three component catalyst comprising a Group 2 metal organometallic compound, an organoaluminum compound and water in which the catalyst and/or polymerization are affected in the presence of an amine.

Japanese Patent 45/018476 use a two-component catalyst of a partial hydrolyzate of

an aluminum alkoxide and a Group 2 or 3 organometal compound.

Japanese Patent 45/028590 relates to the use of an organozinc compound and a phosphine as the catalyst.

Japanese Patent 46/007709 relates to a catalyst comprising a coordinated complex of an organozinc compound and dimethyl sulfoxide.

Japanese Patent 46/027533 polymerizes alkylene oxides in the presence of a catalyst comprising an organozinc compound and dimethyl sulfoxide and at least one of the compound from the group of water, alcohols and primary and secondary amines.

As can be seen, none of the references produce a catalyst dispersion by reacting a dihydrocarbyl zinc compound with a polyol in contact with a fumed metal oxide, e.g., fumed silica, and a nonionic surfactant.

The use of fluidized bed reactors to polymerize alkylene oxides is known but none have disclosed the use of the catalyst dispersion of this invention. Among the published items of interest that may be of assistance is U.S. Patent No. 4,385,173, issued on May 24, 1983 to Peter Dix et al. wherein there is disclosed a fluidized bed process for producing polyol polyethers. As disclosed in this patent a flow of alkylene oxides is passed through a contained bed of substantially solid polyol. The reference makes no mention of applicant's claimed catalyst dispersions.

## Summary of the Invention

This invention is based on the discovery of new catalyst compositions, processes for their production, and processes for their use in the polymerization of cyclic alkylene oxides, e.g., ethylene oxide or propylene oxide, in the production of high molecular weight polymers and copolymers. The novel catalyst compositions are stable and non-pyrophoric, readily handled, provide controllable catalytic activity enabling one to carry out the polymerization reaction at from very low to very high polymerization rates and productivities, produce polymers free of objectionable odor, provide control of the polymer molecular weight, and eliminate, in most instances, the need to grind the polymer product to obtain the commercially desired particle size.

The present invention also provides an improved polymerization process by often reducing the duration of the induction period encountered with most zinc catalyst heretofore used.

The novel catalyst compositions of this invention are fine particle size dispersions of zinc alkoxides and/or aryloxides and a high surface area dispersion aid in an inert hydrocarbon medium and a nonionic surfactant.

## Detailed Description of the Invention

The improved catalyst compositions of this invention are based on certain dispersions of alkoxides and aryloxides of zinc, dispersion aid and surfactant. The catalyst compositions are prepared as hereinafter more fully described and are in the

form of very fine particles that may be dispersed in an inert, generally hydrocarbon, medium. They have a controlled particle size, high surface area and porosity, and consequently exhibit controlled activities or polymerization rates.

It is known that zinc dialkoxides are usually crystalline solids of relatively low surface area if both alkoxy groups are the same, e.g., methoxy, ethoxy, etc. Thus, zinc dimethoxide and zinc diethoxide are crystalline solids having sharp x-ray powder patterns. These unmodified compounds per se are, at best, poor catalyst for the polymerization of propylene oxide and allied oxirane compounds. In a set of propylene oxide polymerizations carried out at 40°C over a period of seven days using 5.82 mole percent of the zinc dialkoxide as catalyst, a polymer yield of 1.3 percent was obtained using crystalline zinc dimethoxide and a polymer yield of 0.2 percent was obtained using crystalline zinc diethoxide. These low yields are commercially unacceptable. In an attempt to improve the yield, the amorphous zinc methoxide/ethoxide compound was evaluated. This resulted in a polymer yield of 79.5 percent over a ten-hour reaction period. Though this shows an improvement, it is still not commercially acceptable.

It is also known that the reaction of an alcohol or a polyol, e.g., a diol, in an inert hydrocarbon diluent with a hydrocarbon solution of a dialkyl zinc compound, even when vigorous stirring is employed, rarely, if ever, leads to a zinc alkoxide catalyst which has a reproducible high

activity. For example, when 1,4-butanediol is dispersed in hexane, most of the diol is present as a slow moving film on the surface of the reactor wall, while the mixture is being stirred and separates out as a separate layer when stirring is stopped. Upon addition of a dialkyl zinc, the zinc dialkoxide catalyst produced rarely has reproducible high activity.

In the catalyst producing process of this invention, the important feature is the presence of certain defined dispersing aids during the reaction of the polyol with the hydrocarbyl zinc. Another feature that assists in the production of the high activity catalyst of this invention is the presence of a surfactant, most preferably a nonionic surfactant, during the reaction. The use of surfactant and dispersion aid are critical features in this invention.

The catalyst compositions of this invention are produced by reacting a dihydrocarbyl zinc with an emulsion of a polyol-surfactant-dispersion aid, all in an inert medium, to yield a dispersion of fine solid particles.

The zinc compounds are preferably the alkyls and aryls of the general formula $R_2Zn$ in which R is (i) an alkyl group containing from 1 to about 8 carbon atoms, preferably 1 to 6 carbon atoms, and most preferably 2 or 3 carbon atoms, or (ii) phenyl or naphthyl or alkyl-substituted phenyl or naphthyl groups in which the alkyl groups contain from 1 to about 3 carbon atoms, or (iii) cycloalkyl groups containing from 4 to 6 ring carbon atoms; or

(iv) the dicyclopentadienyl group. Illustrative thereof are dimethylzinc, diethylzinc, dipropylzinc, di-isopropylzinc, dibutylzinc, di-isobutylzinc, di-t-butylzinc, the dipentylzinc salts, the dihexyl- and diheptyl- and dioctylzinc salts, di-2-ethylhexylzinc, diphenylzinc, ditolylzinc, dicyclobutylzinc, dicyclopentylzinc, di-methylcyclopentylzinc, dicyclohexylzinc, methyl phenylzinc, methyl tolylzinc, methyl naphthylzinc, ethyl phenylzinc, and similar known compounds. The nature of the zinc compounds is not critical but those possessing some solubility in the reaction medium employed are generally preferred.

Attempts to produce the catalyst dispersions with other hydrocarbyl metal compounds that could be used to polymerize ethylene oxide or propylene oxide, succeeded in producing fine, stable, white dispersion. However, these dispersions were not active catalysts for this polymerization reaction. Though they are not active catalysts for this polymerization reaction they can have other utility. The hydrocarbyl compounds used were tri-isobutylaluminum, triethylaluminum, di-n-butylmagnesium, a 50:50 mixture of diethylzinc and triethylaluminum and a 50:50 mixture of diethylzinc and di-n-butylmagnesium. The experiments showed that dilution of the dialkylzinc with an equal amount of an organoaluminum or an organomagnesium compound had a deleterious effect. On the contrary, use of straight dialkylzinc produces a highly effective catalyst for this polymerization reaction. These findings were

comple: ly unexpected and unpredictable. The hydrocarbyl compounds can be represented by the general formula $R_xM$ where R is a previously defined, M is zinc, aluminum, titanium or magnesium and x is the valence of M.

According to a special embodiment the alkyl substituent on the phenyl or naphthyl group (meaning of R) contains 1 to 4 carbon atoms.

The polyols reacted with the zinc compound are preferably the diols. The nature of the polyol appears to be important and may be critical. While active catalysts can be made from a wide variety of polyols, best catalytic activity appears to be obtained by the use of the linear alkanediols, particularly good catalytic activity, as evidence by yield and rate, being achieved with 1,4-butanediol. In addition to the alkanediols, one can use a polyhydric phenol such as resorcinol, catechol, the cyclohexane diols, hydroquinone, and similar compounds. The alkanediols include the alkanediols having from 2 to about 6 carbon atoms in the alkylene chain, preferably 4 carbon atoms, and the cycloalkanediols having 5 or 6 ring carbon atoms, or mixtures thereof. Illustrative thereof are ethylene glycol, diethylene glycol, triethylene glycol, 1,3-propanediol, 2-hydroxyethoxyisopropanol, 1,4-butanediol, 1,5-pentanediol, 1,6-hexanediol, cyclopentanediol, methylcyclopentanediol, cyclohexanediol, glycerine, and similar compounds.

Any inert hydrocarbon medium can be used as the medium in producing the catalyst. These compounds are well known to those of ordinary skill in the art and illustrative thereof are hexane, isopentane, heptane, octane, benzene, toluene,

decalin, or mixtures of these and/or other inert hydrocarbons.

The dispersion aid is, to a certain extent, quite critical and not all known materials can be used. It serves two primary purposes: it helps to establish a dispersion of the polyol in the hydrocarbon medium and it serves as a source of nuclei for the polyol dispersion droplets. The dispersion aid has an average particle size of less than about 10 nm (10 nanometers) in size, it is preferably less than about 5 nm, and can be as low as 0.5 nm. It also has a highly polar surface. Though it is known that many silicas, aluminas, magnesias and titanias are useful as catalysts or catalyst supports, it has been found that essentially most of these may not be useful as dispersion aids in this invention for one reason or another in that they do not consistently produce a catalyst of sufficiently high activity for the cyclic oxiranes, or they do not produce a catalyst having commercially acceptable polymerization rates, or they do not permit consistent reproduction of a catalyst composition from batch to batch. It has now been found that a certain type of dispersion aid will overcome many of these deficiencies; this finding or discovery being completely unexpected and unpredictable. It was found that the use of a limited group of fumed metal or non-metal oxides, for example, those of titanium, silicon, aluminum, zinc, iron and magnesium, formed stable, fine particle-size catalyst dispersions and that, in particular, fumed silica, unexpectedly and

unpredictably permits the production of a zinc-based catalyst which outperforms previously known zinc-based catalysts for the polymerization of cyclic oxirane compounds. The fumed oxides useful in this invention are known to those of ordinary skill in the art and many are commercially available. They preferably have an average particle size of less than about 10 nm, have a highly polar surface, have a high surface area of from about 10 to about 600 square meters per gram (10-600$m^2$/g BET/$N_2$), preferably above about 300 square meters per gram, and the surface of which is covered with -OH groups rendering the material hydrophilic. It was observed that fumed silica having its surface covered with $-OSi(CH_3)_3$ groups did not produce an active catalyst. Generally, before using the fumed oxide to produce the catalyst compositions of this invention, it is dried at elevated temperature (e.g., 200°C) for a period of time to remove adsorbed water, even though undried material may be used. Among the suitable oxides are fumed silica and fumed alumina. Preferred forms for the preparation of catalysts used for the polymerization of ethylene oxide and propylene oxide are the fumed silicas, since they yield catalysts of high activity and polymerization rates for this reaction. The other fumed metal oxides also produce dispersions but they show little catalytic activity with these cyclic oxiranes. A convenient source of fumed silica is available and known as Aerosil-380® (Degussa), though this invention is not limited to

this product only and the examples show that others are equally satisfactory.

The use of a surfactant is beneficial in that it improves the stability of the dispersion during preparation of the catalyst composition and after so that only prolonged stoppage of agitation leads to phase separation and in the event phase separation does occur the dispersion is more readily reconstituted. The preferred surfactants are the nonionic surfactants well known to those of ordinary skill in the art. A preferred class is the nonionic alkylaryl alkoxylates in which the alkyl group contains from about 4 to about 18 carbon atoms and the alkoxylate group is ethyleneoxy and there are from about 2 to about 20 ethyleneoxy units in the molecule; e.g., the 4-mole and 10-mole ethyleneoxy adducts of p-nonylphenol. One can also use the adducts in which the alkoxylate group is propyleneoxy or a mixture of ethyleneoxy and propyleneoxy. Generally, any nonionic surfactant may be used.

Neither the nature of the nonionic surfactant nor the amount employed appears to be critical, provided the minimum amount approximates one molecular layer of surfactant over the approximate surface area of the finished catalyst. At concentrations significantly below this amount the stability of the dispersion drops and there may be a loss of catalyst activity. The procedure for calculating these values is well documented in the published literature and known to those skilled in the art. Thus, it is known the approximate surface

area of the surfactant is about 15 square Angstroms per surfactant molecule; knowing the surface area of the amount of dispersion aid and catalyst composition one readily calculates the minimum amount of the surfactant needed to approximately cover the surface area of the catalyst. Use of an excess amount of surfactant is not deleterious.

Further illustrative of typical nonionic surfactants are the following:

(A) $n\text{-}C_mH_{2m+1}C_6H_4(\overset{R''}{CH}\ CH_2O)_xH$

(B) $n\text{-}C_mH_{2m+1}O(\overset{R''}{CH}\ CH_2O)_xH$

(C) $(n\text{-}C_mH_{2m+1})_2NH$

(D) 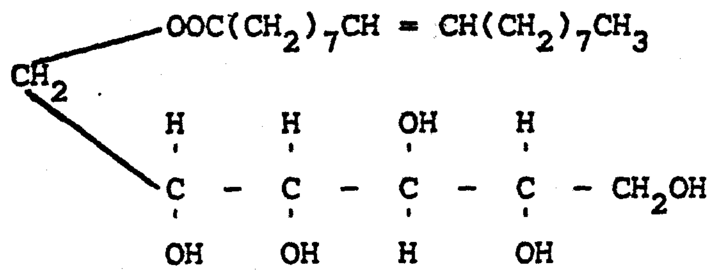

where: x = 2-20
m = 4-18
R" = H or alkyl of at least 1 carbon atom, preferably from 1 to about 25 carbon atoms.

The amount of surfactant used should preferably be a minimum of one monolayer of the surface area (1-200$^+$ $m^2$/g BET/$N_2$) of the finished catalyst.

In preparing the catalyst composition the order of addition of reactants is not critical. Illustratively, the reactor is charged with hydrocarbon diluent and dispersion aid, purged with an inert gas (e.g., nitrogen, argon) and to this mixture is added in any sequence, or as a mixture, the polyol and the surfactant and the mixture is stirred for a short while to form a dispersion of a liquid polar material in the non-polar medium. The zinc compound, either neat or in hydrocarbon diluent, is added as rapidly as possible while maintaining the desired temperature by adequate cooling means, and while stirring. The reaction produces the solid zinc alkoxide dispersion catalyst composition and an alkane; the alkane vents off if it is a low boiling gas; if it is a liquid, it can either be removed or permitted to remain as part of the hydrocarbon diluent. After all components have been added, the mixture is stirred for an additional period of time to assure as complete reaction as possible to the zinc dialkoxide. It is most important that the entire reaction is carried out under conditions that exclude moisture, oxygen and reactive materials, other than the reactants, from the system. This is easily accomplished by continuous purging with a dry inert gas of high purity, e.g., nitrogen. The resulting product is a fine particle dispersion of the solid zinc alkoxide and the dispersion aid in the hydrocarbon diluent. This dispersion is the catalyst composition; if desired it can be further treated to remove the diluent (readily accomplished by known procedures)

and the catalyst can be recovered as a fine, free-flowing powder that is preferably stored under an inert atmosphere. If desired, it can be shaped into a pellet, tablet, or other shaped article.

The rate of dihydrocarbyl zinc compound addition has an effect on the properties of the catalyst. Too slow addition will generally result in a catalyst of low activity in the alkylene oxide polymerization reaction. It is preferred to add the dialkyl zinc compound as rapidly as possible while maintaining a constant reaction temperature through adequate cooling. It was observed this reaction temperature has an effect on the activity of the resulting catalyst. A high reaction temperature, above about 60°C, yields a catalyst of modest activity, about 10,000 to 20,000 g of polyethylene oxide per hour per g-atom zinc, while a catalyst prepared at a lower temperature, about 10°C, can be exceptionally active, up to more than 200,000 g of polyethylene oxide per hour per g-atom zinc.

If desired, the reaction can be carried out by simultaneously adding separate streams of a dispersion of the silica dispersion aid, polyol and surfactant in a diluent and the dihydrocarbyl zinc compound in a diluent, in carefully controlled stoichiometry, to a reactor. Thus, better temperature control can be realized. In the laboratory scale reactions of the examples of this specification the addition time varied from about 2 minutes up to about 20 minutes and was dependent upon the efficiency of the cooling means employed and stirring. Conventional external temperature

control procedures were followed. In larger scale reactions, the addition time should be as short as possible and the addition of the zinc compound should be as rapidly as possible while maintaining the selected temperature by procedures known to the average engineer. It is obvious that large scale reactions may require longer periods of time since larger volumes are employed. One can also carry out the reaction in a tubular reactor by careful control of amounts of materials added and flowing through the tubular reactor followed by completion of the reaction in a stirred reactor, if necessary.

The temperature at which the catalyst is prepared can vary from about 0°C or lower up to the boiling point of the hydrocarbon diluent in the reactor, preferably from about 0°C to about 50°C, most preferably from about 0°C to about 40°C.

Pressure is not critical in catalyst preparation and it can be subatmospheric, atmospheric or superatmospheric.

The time required for the reaction will vary depending upon the particular reactants employed, the temperature and size of the batch. Adequate time should be allowed to permit the reaction to go to completion. After all reactants have been introduced, the temperature can be raised to expedite the reaction and to assure its completion.

In preparing the zinc dialkoxide catalyst compositions of this reaction, the concentrations of polyol and zinc compound should be in a fairly exact stoichiometric amount. Sufficient zinc compound

should be added to the polyol to react with all of the -OH groups that may be present in the silica (from SiOH), or other fumed metal oxide used, or in the surfactant molecule, or as trace quantities of water. In other words, the amount of dihydrocarbyl zinc compound added should be sufficient to react with the total active hydrogen groups present no matter from what source (e.g., hydroxyl, amine, water, etc.). This is important since neither $R_2Zn$, nor $RZnOCH_2$-, nor $HOCH_2CH_2O$- are active as polymerization initiators under the polymerization conditions. As a consequence, a fairly exact Zn atom/-OH stoichiometry is needed to yield a catalyst that is almost exclusively composed of $-CH_2CH_2-O-Zn-O-CH_2CH_2-O-$ assemblies. Experimentally, it was found that an excess of one reagent or another (excess -OH or excess Zn) results in a catalyst of decreased activity or an inactive catalyst.

The relative amount of divalent dihydrocarbyl zinc compound added to the reaction mixture will depend on the total active hydrogen-containing groups present. Depending upon the number of total active hydrogen-containing groups present, this can vary from about 1.8 to 2.2 mole equivalents of active hydrogen group per mole of divalent zinc compound, preferably from about 1.95 to 2.05 mole equivalents of active hydrogen groups per mole of divalent zinc compound, and most preferably from 1.99 to 2.01 mole equivalents of active hydrogen groups per mole of divalent zinc compound.

The concentration of the catalyst in the diluent can vary widely and can be as high as 50 weight percent or more of the dispersion. For ease of handling (stirring, transfer, etc.) a concentration of from about 10 to about 30 weight percent is more convenient.

The concentration of dispersion aid used is not critical and can vary from about 2 weight percent to about 25 weight percent of the zinc dialkoxide catalyst or more, on a dry basis, and it is preferably from about 10 weight percent to about 15 weight percent.

When produced as described above the catalyst composition is generally a stable dispersion of a very fine, white solid of zinc alkoxide and/or aryloxide and fumed silica dispersion aid dispersed in the hydrocarbon diluent. This dispersion is an excellent catalyst that polymerizes ethylene oxide at high rates and essentially quantitatively to high molecular weight resins; results that were completely unexpected and unpredictable. The particles in the dispersion are generally considerably smaller, from 5 to 10 times smaller, and more uniform in size and shape than are the particles obtained attempting to duplicate the procedures disclosed in Japan 45-07751 and Japan 78-27319 (Noda, Saigusa and Kajita) published March 18, 1970 and August 8, 1978, respectively. The particle size of the catalyst produced in accord with this invention was generally considerably less than 0.25 micron and in most instance averaged from about 0.07 to 0.1 micron in size. In contrast, the

particle size of the particles produced using the methods disclosed in the Japanese patents averaged from about 0.5 to 1 micron in size. This difference, when comprising particles of this size of magnitude, is a considerable difference, as is recognized by one skilled in this art. That such uniformity and small particle size could be obtained by the process of this invention was completely unexpected and unpredictable. The higher rates and yields of alkylene oxide polymer attainable by this invention are of significant commercial significance since it means that the residual concentration of zinc atom in the polymer is so small that further purification to remove the zinc is not necessary. Concentrations as low as about 0.003 gram atom or less per 1,000 g or more of finished polyethylene oxide have been attained.

It is recognized that though applicant has set forth procedures for producing the catalyst composition; nevertheless, it is also recognized that these are not the sole methods that may be used and one can make minor modifications thereto and still produce the improved, novel catalysts of this invention. It is also to be recognized that one can choose to isolate the solid catalyst from the dispersion and this isolated catalyst is equally useful for the production of the alkylene oxide polymers. Procedures for such isolation are known in the art.

## THE POLYMERIZATION

The catalyst compositions of this invention will readily polymerize the cyclic oxide compounds

of the formula:

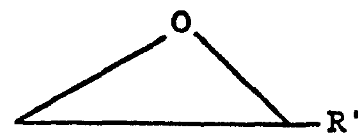

in which R' is H or $CH_3$- to high molecular weight homopolymers and copolymers (random or block copolymers). One can also have present in the polymerization mixture small amounts of other known cyclic alkylene oxides, if one so desires, e.g., styrene oxide, butylene oxide, cyclohexene oxide, provided they do not unduly retard or interfere with the principal polymerization reaction.

The polymerization reaction can be carried out in any desired manner. It can be a batch, continuous or semi-continuous process or a combination thereof. The catalyst can be added all at one time, or in increments or continuously during the reaction. Likewise, the monomer may be added continuously to the reactor. The polymerization can be carried out in bulk (in the absence of a solvent) or in the presence of an inert solvent or diluent. Any of the known inert solvents or diluents can be used such as one or more of the saturated aliphatic and cycloaliphatic hydrocarbons, the aromatic hydrocarbons, and the like, for example, hexane, cyclohexane, octane, isooctane, benzene, toluene, xylene, petroleum ether, or any other solvent that is inert under the polymerization conditions.

One can also add after the polymerization reaction any of the additives known to be usable that do not have a significantly deleterious effect.

These are so well known in the art that an extensive description is not warranted other than to say they include antioxidants, thermal stabilizers, light stabilizers, colorants, fillers, as well as materials one may wish to include in the polymer to achieve a desired objective.

The polymerization process can be carried out over a wide temperature that can range from about -10°C to about 100°C, preferably from about 0°C to about 65°C and more preferably from about 20°C to about 45°C. These temperatures are known as suitable in the art and the temperature used is not critical for this invention.

The polymerization pressure is not critical; it can be subatmospheric, atmospheric or superatmospheric. Generally the polymerization reaction is carried out at autogenous pressure.

All reactions were carried out using clean and dry equipment, reactants that are essentially free of moisture or other polymerization inhibiting materials,and under an inert gas atmosphere. The monomer should be a high purity polymerization grade material, otherwise prolonged induction periods are observed.

A catalytic amount of catalyst sufficient to polymerize the cyclic oxide is used. This can vary from about 0.001 mole percent zinc atom to about 1 mole percent zinc atom, based on the moles of cyclic oxide charged.

It is also possible to carry out the polymerization by conventional fluid bed processes in the vapor phase. This technique has many

advantages in that there is no need for a solvent, thus eliminating problems associated with handling, storage, losses, removal and recycle; there is no need for filtration and drying steps; a continuous reaction system is used and lower catalyst usage and costs result. The fluid bed polymerization processes are well known and exemplary thereof is the process described in U.S. Patent No. 4,003,712, issued January 18, 1977 to Adam R. Miller for the production of solid particulate olefin polymers. Similar processes are described in U.S. Patent No. 4,001,382, issued March 8, 1977 to Isaac J. Levine and Frederick J. Karol and in U.S. Patent No. 4,354,009, issued on October 12, 1982 to George L. Goeke et al.

In a typical embodiment of the fluid bed polymerization, the medium-free and dry catalyst is suspended in previously prepared, screened and nitrogen-purged polyethylene oxide. On fluidization of the bed (in a fluid bed reactor) with gaseous ethylene oxide, or an ethylene oxide-nitrogen (or other inert gas) mixture, the polymerization takes place. Proper feed control, temperature, recycle and recovery means are required to prevent fusion of the bed; all of these procedures being known to those of average skill in the art. The catalyst can be neat, diluted with an inert carrier material or diluted with a polyalkylene oxide.

Solution viscosities were determined using a one weight percent gel free solution of the polymer in a 10 volume percent aqueous propanol solution at 25°C. The procedure for obtaining the

solution viscosity may be found in Bulletin numbered F-44029C of June, 1982 published by the Union Carbide Corporation and entitled "POLYOX® Water Soluble Resins Are Unique".

The polymerization rate was measured by removing liquid samples from time to time for analysis by gas chromatography using syringes cooled on dry ice. Gas chromatography analysis of these samples yields the percent unreacted ethylene oxide remaining in the hydrocarbon medium. A plot of percent monomer conversion versus time is prepared and a straight line through the origin and the 50 percent conversion product sample is made. The slope of this line yields the initial polymerization rate. The calculation is as follows for 40 g of monomer in 500 ml of hexane solution, 50 percent polymerized in 20 minutes, 0.005 mole atom zinc catalyst used:

$$\text{Initial Polymerization Rate} = \frac{20\ \text{g PEO}}{(0.33\text{hr})(0.005\ \text{m cat})}$$

$$= \frac{12{,}120\ \text{g PEO}}{\text{hr - mole catalyst}}$$

The overall polymerization rate is determined as shown in Example 19 for use of Catalyst Sample B.

Particle size distribution was determined by using appropriate sieves and shaking for 10 minutes followed by weighing the residue on each sieve.

Gas chromatographic analysis was carried out using a dual column Hewlett-Packard 5880 gas chromatogram flame ionization atom detector. Basic

board and a data processing program were used to convert the experimentally determined numbers to the various kinetic parameters. The gas chromatograph columns were 1/8-inch in diameter and six feet long; they were packed with 20% CARBOWAX 20M® (high molecular weight polyethylene oxide) on 40/60 mesh Teflon®. Helium flow was 30 ml per minute at 225°C; pressure was 60 psi; a 1 microliter liquid sample was used; injection port and detector temperatures were 300°C.

The following examples serve to illustrate the invention.

EXAMPLE 1

A 14.16 g portion of dried (at 200°C for 24 hours) fumed silica (Aerosil-380®) was placed in a dry 1-liter, 3-necked, round bottomed flask equipped with a thermometer and egg-shaped plastic coated magnetic stirring bar. The flask was flushed with dry nitrogen and 450 ml of dry distilled (calcium hydride-nitrogen) hexane was added. The mixture was stirred and 25.58 g of 1,4-butanediol (containing 277 ppm water) was added to the slurry; after stirring for about 5 minutes, 16.8 g of the nonionic surfactant NP-10® (nonylphenol-10-mole ethoxylate adduct containing 0.42% water) was added. The slurry was stirred for three hours at 45°C to yield a smooth dispersion. A 23.8% by weight solution of diethylzinc, containing 0.2872 mole of the zinc compound, in hexane was added to the dispersion within a two-minute period, with cooling, at a temperature of 45°C to 51°C. Rapid expulsion of ethane resulted. The white dispersion of zinc

alkoxide/fumed silica reaction product in hexane was stirred an additional 18 hours at 45°C. The entire reaction sequence was conducted under a nitrogen atmosphere. The resulting product was an excellent catalyst for the polymerization of ethylene oxide to solid polymer.

EXAMPLE 2

A polymerization reactor equipped with thermometer and a plastic coated magnetic stirring bar was charged with 340 g of dry hexane, purged with nitrogen, cooled to about 2° to 4°C and dry ethylene oxide was bubbled through the hexane. A total of 45 g of ethylene oxide was dissolved in the hexane and the solution was then warmed to about 30°C. A 20 ml portion (0.007 mole Zn) of the catalyst dispersion of Example 1 was added at about 30°C and the mixture was stirred while maintaining that temperature. After about 65 minutes, ethylene oxide was added at a flow rate of 2 g per minute and this was continued at about 30°C for a period of about 2 hours; the mixture was then stirred for about another one-half hour. The reaction was stopped by adding 0.1 g of 2,6-di-t-butyl-p-cresol in hexane followed by 10 ml of isopropanol. The yield of dry white, fine granular polyethylene oxide was 209.3 g; it had an average molecular weight of about $6.5 \times 10^6$. The polymer was produced at a rate of 21,000 g/hr-g at. Zn (grams polymer per hour per gram atom zinc).

EXAMPLE 3

A series (Runs A-M) of catalyst compositions was prepared by following the general procedure described in Example 1. The quantities of materials added to the reactor and the yields are summarized in Table I. On addition of the 1,4-butanediol to the hexane-fumed silica, globs of oil floating in the fumed silica-hexane dispersion resulted; these yielded a white, milky dispersion over a two-hour mixing period. If stirring was stopped, the phases separated. After addition of the surfactant (NP-10) and continued stirring for about 2 hours the dispersion was more stable than without the surfactant when stirring was stopped. The diethylzinc was added and reacted at about the temperature shown in Table I. In all runs a white dispersion of the substantially amorphous catalyst in the hydrocarbon medium was obtained as the final product. This dispersion was stored in a septum stoppered glass bottle. The reactants employed were those described in Example 1 with the exception that Run I was carried out using cyclohexane as the medium and, further, the reaction mixture was maintained at the boiling point of the medium after addition of the diethylzinc. The catalysts were used to carry out the polymerization reactions of Example 4, Runs A-M, respectively. In these catalyst preparation runs there was a sequential addition of 1,4-butanediol and surfactant. The data is summarized in Table I.

TABLE I

| Run | Fumed Silica g | Hexane ml | Butane-diol g | NP-10 g | $(C_2H_5)_2Zn$ mole*** | Temp. °C |
|---|---|---|---|---|---|---|
| A | 14.16 | 450 | 23.58 | 16.06 | 0.2871 | 47 |
| B | 12.86 | 450 | 24.71 | 16.34 | 0.2971 | 10 |
| C | 13.8 | 450 | 26.82 | 17.6 | 0.3256 | 60 |
| D | 12.73 | 450 | 25.54 | 16.08 | 0.3077 | 26 |
| E | 12.8 | 450 | 25.26 | 15.34 | 0.3036 | 28 |
| F | 12.6 | 450 | 24.23 | 19.1 | 0.2936 | 28 |
| G | 12.6 | 450 | 26.05 | 17.72 | 0.3145 | 49 |
| H* | 1.67 | 50 | 1.76 | 1.37 | 0.0219 | 45 |
| I | 11.92 | 314.8[a] | 25.1 | 16.28 | 0.3010 | 75 |
| J | 13.4** | 450 | 28.43 | 22.56 | 0.3437 | 22 |
| K | 12.54 | 450 | 26.67 | 18.89 | 0.3311 | 22 |
| L | 131. | 450 | 29.14 | 17.9 | 0.3481 | 23 |
| M | 11.24 | 450 | 28.71 | 12.05 | 0.3374 | 24 |

* 100-ml flask used
** Aerosil-300®
*** Assayed as about 25 weight percent solution in hexane
a Cyclohexane medium

EXAMPLE 4

The catalyst prepared in Example 3, Runs A-M, were separately used to polymerize ethylene oxide to evaluate the effect of catalyst preparation temperature on catalyst activity. This series of polymerizations (corresponding Runs A-M) was carried out using a heat-dried, cooled one-liter, 4-necked flask equipped with a thermometer, Teflon® bladed stirrer and two dry ice condensers. A rubber tipped

adapter was inserted into the reactor so that the tip was about one inch above the 500 ml liquid level. The reactor was purged with nitrogen, 500 ml of dry hexane was added, and this was purged for one-half hour by bubbling dry nitrogen through it. Under nitrogen blanketing the vessel was cooled while gaseous ethylene oxide was added to saturation of the hexane at 30°C. This generally resulted in an about 11 weight percent ethylene oxide-hexane solution. Using dry ice cooled gas chromatograph syringes two samples were taken for analysis prior to catalyst addition. The catalyst dispersion was added by syringe and the polymerization was carried out at about 30°C. After the initial induction period samples of the reacting mixture were taken with syringes for gas chromatographic analysis; the temperature was controlled by external cooling of the reactor. The reaction was terminated by addition of 0.1 g of 2,6-di-t-butyl-p-cresol (BHT) dissolved in 5 ml of hexane followed by 5-10 ml of isopropanol, the slurry of polyethylene oxide was filtered under nitrogen and dried at room temperature under vacuum and a nitrogen bleed. The resulting polyethylene oxide was a fine white powder that was analyzed for its viscosity, particle size distribution, BHT content and zinc content. The zinc analysis is used to calculate the actual amount of catalyst used in the reaction. The results of the polymerizations are summarized in Table II. The reaction time commences with the termination of the induction period. The results of Runs A-M of Examples 3 and 4, summarized in Tables I and II,

show that as the temperature at which the catalyst is prepared is lowered, the activity of the catalyst in g PEO/hr-g at. Zn increases.

TABLE II

| Run | Catalyst charged mole/Zn | Induction Period min. | Reaction Time min. | Rate * | Yield g | Initial Viscosity cps |
|---|---|---|---|---|---|---|
| A | .0096 | 9 | 135 | 173,000 | 209.3 | 8,520 |
| B | .0019 | 6 | 77 | 181,190 | 164.1 | 12,900 |
| C | .0096 | 2 | 113 | 8,100 | 39.4 | 6,900 |
| D | .003 | 32 | 83 | 55,575 | 207.5 | 12,260 |
| E | .0035 | 26 | 87 | 66,000 | 243.3 | 14,240 |
| F | .003 | 7 | 118 | 71,000 | 251.9 | 14,960 |
| G | .01 | 1 | 166 | 12,700 | 233.0 | 8,840 |
| H | .022** | 1 | 69 | 10,300 | 42.9 | 465 |
| I | .00196 | 4 | 33 | 27,000 | 96.9 | 1,225 |
| J | .0025 | 20 | 33 | 135,000 | 39.1 | 3,255 |
| K | .003 | 70 | 24 | 90,000 | 38.8 | 1,975 |
| L | .0034 | 17 | 15 | 157,000 | 42.9 | 2,130 |
| M | .0034 | 176 | 36 | 50,000 | 31.5 | 2,910 |

* g PEO/hr-g at. Zn

** Based on syringed volume; other from direct zinc analysis of polymer

EXAMPLE 5

A series of ethylene oxide polymerizations was carried out using the catalyst composition of Run J of Example 3 and varying the concentration of catalyst used. Though it would appear that the induction period and polymerization rate show some

dependence on catalyst concentration, some inconsistencies in the results indicate that trace amounts of impurities may have been present in the ethylene oxide monomer and diluent that are affecting the reaction. Nevertheless, it appears that use of a higher catalyst concentration is beneficial in production of polyethylene oxide. The procedure followed was basically similar to that described in Example 4. The data is summarized in Table III.

TABLE III

| Run | Catalyst Charged g at. Zn | Induction Period min. | Rate * | Yield g | Initial Viscosity cps |
|---|---|---|---|---|---|
| A | 0.001[a] | 128 | 113,000 | 32.2 | 4,330 |
| B | 0.001[a] | 232 | 84,000 | 38.8 | 7,320 |
| C | 0.0017[a] | 133 | 115,000 | 38.8 | 4,115 |
| D | 0.0025[b] | 22 | 135,000 | 39.1 | 3,255 |
| E | 0.0024[b] | 70 | 113,000 | 39.6 | 3,985 |
| F | 0.0025[b] | 19 | 135,000 | 36.7 | 3,420 |
| G | 0.0024[b] | 66 | 135,000 | 35.0 | 3,475 |
| H | 0.0023[b] | 126 | 113,000 | 38.7 | 3,660 |
| I | 0.0051[b] | 10 | 174,000 | 41.5 | 1,550 |

a Calculated based on syringed volume only
b Based on zinc analysis of product
* g PEO/hr-g at. Zn

EXAMPLE 6

Another series of ethylene oxide polymerizations to form polyethylene oxide was conducted using the catalyst composition of Run F of Example 3 at varying concentrations. The induction

periods were highly variable but the polymerization rate was reasonably constant and did not appear to be dependent upon catalyst concentration. The procedure followed was basically similar to that described in Example 4. The data is summarized in Table IV. In Run F a copolymer of ethylene oxide and propylene oxide was produced.

TABLE IV

| Run | Catalyst Charged g at. Zn | Induction Period min. | Rate * | Yield g | Initial Viscosity cps |
|---|---|---|---|---|---|
| A | 0.003 | 3 | 77,000 | 251.9 | 14,960 |
| B | 0.001 | 73 | 75,000 | 138.3 | 10,520 |
| C | 0.0017[b] | 18 | 77,000 | 318.2 | 18,600 |
| D | 0.003 | 95 | 94,500 | ca. 40 | n.a. |
| E | 0.003 | 7 | 90,000 | 40.6 | 6,820 |
| F | 0.0175[b] | 13 | 56,000 | 81.5[c] | n.a. |

a Calculated based on syringed value
b calculated based on Zn analysis of polymer
c Recovered as a solid lump
* g PEO/hr-g at. Zn
n.a. not available

EXAMPLE 7

The catalyst compositions were prepared using a variety of surfactants; these were

S-1 $n-C_9H_{19}C_6H_4O(CH_2CH_2O)_{10}H$ (NP-10®)

S-2 $n-C_9H_{19}C_6H_4O(CH_2CH_2O)_{10}H$ (NP-4®)

S-3 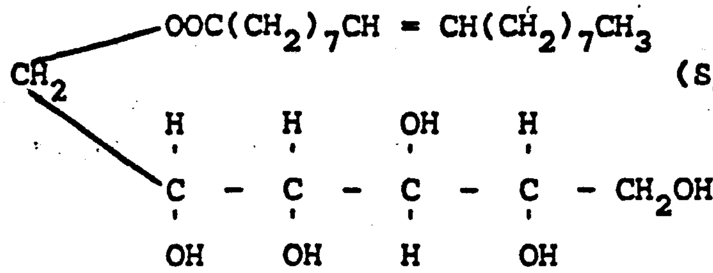 (Span80®)

S-4 $n\text{-}C_9H_{19}O(CH_2CH_2O)_9H$ (TERGITOL 15-S-9®)

S-5 $(n\text{-}C_8H_{17})_2NH$

The procedure followed was basically similar to that described in Example 3 using Aerosil-300® fumed silica in Run A and Aerosil-380® fumed silica in Runs B to E. The data is summarized in Table V.

TABLE V

| Run | Surfactant g | Fumed Silica | Hexane ml | Butane diol | $(C_2H_5)_2Zn$** mole | Temp. °C |
|---|---|---|---|---|---|---|
| A | 22.56 (S1) | 13.4 | 450 | 28.43 | 0.3437 | 20-24 |
| B* | 41.38 (S2) | 44.5 | 2,000 | 103.58 | 1.1673 | 18-23 |
| C* | 7.12 (S3) | 10.2 | 500 | 26.14 | 0.2887 | 25-29 |
| D* | 15.33 (S4) | 10.9 | 500 | 25.80 | 0.2915 | 20-28 |
| E* | 6.34 (S5) | 11.0 | 500 | 25.84 | 0.2946 | 23-27 |

* The 1,4-butanediol and surfactant were premixed.
** As an about 25 weight percent solution in hexane.

All surfactants were capable of producing a stable, fine, white, small particle size catalyst dispersion as the final product.

EXAMPLE 8

The catalyst compositions of Example 7, Runs A to E, were used to polymerize ethylene oxide

(Runs A to E of this Example 8, respectively) using the procedure basically similar to that described in Example 4. The data is summarized in Table VI.

TABLE VI

| Run | Catalyst Charged g at. Zn | Induction Period min. | Rate * | Yield g | Initial Viscosity cps |
|---|---|---|---|---|---|
| A | 0.003 | 17 | 150,000 | 40.0 | 3,345 |
| B | 0.003 | 56 | 156,000 | 41.9 | 1,850 |
| C | 0.005 | 183 | 90,000 | 40.9 | 1,930 |
| D | 0.006 | 73 | 195,000 | 45.3 | 3,900 |
| E | 0.006 | 107 | 56,000 | 41.7 | 1,530 |

a Calculated based on syringed value
* g PEO/hr-g at. Zn

EXAMPLE 9

A catalyst composition was prepared by the simultaneous addition of 1,4-butanediol and surfactant to the fumed silica dispersion in hexane in order to evaluate whether or not it had an effect on the catalyst activity. Based on the results obtained in this example it was believed that whether simultaneous or sequential addition is used is of no consequence. The catalyst was produced following the procedure basically described in Example 3 using 12.78 g of fumed silica (Aerosil-380®), 43.3 g of a mixture that contained 1,4-butanediol (28.03 g) and the surfactant (NP-10®, 20.16 g), 500 ml hexane and 0.3056 mole of diethylzinc as an about 25 weight percent solution in hexane. The diethylzinc solution was

added as rapidly as possible over an 8.3-minute period at 20°-22°C. A stable, fine, particle size dispersion of the catalyst was obtained.

This catalyst dispersion was used to produce polyethylene oxide following the procedure basically similar to that described in Example 4. A 6 ml portion of the catalyst dispersion was used (0.002 g at. Zn). The reaction was conducted at 28° to 33°C. The polymerization rate was 135,000 g PEO/hr-g at. Zn. The polymer viscosity was 4,115 cps and yield was 40.2 g.

Comparing these results with those of Run J of Examples 3 and 4, in which the procedure was to sequentially add the 1,4-butanediol and then the surfactant to the hexane-fumed silica dispersion it is evident that the manner of addition offers no advantage of significance since in both instances good catalyst dispersions and high polymerization rates were obtained.

## EXAMPLE 10

A series of catalyst dispersions was prepared, using different polyols, following the procedure basically described in Example 3 to ascertain the effect of the polyol on catalyst dispersion and on the polymerization rate. Note that Run C in this example corresponds to Run J of Example 3 and used fumed silica Aerosil-300®.

It was observed that in all instances a stable, fine, white, fine particle size dispersion was obtained with the exception of the product of Run I which tended to turn yellow on standing. The data is summarized in Table VIII. The surfactant

0239973

used was S1 in all instances, except Run H that used S2. In Runs E and H a premixed mixture of surfactant and polyol was added to the reactor. The diethylzinc was added as an about 25 weight percent solution in hexane.

TABLE VII

| Run | Polyol * | Polyol g | Surfactant g | Fumed Silica g | Hexane ml | $(C_2H_5)_2Zn$ mole | Temp. °C |
|---|---|---|---|---|---|---|---|
| A | a | 21.93 | 20.24 | 12.1 | 500 | .3779 | 20-27 |
| B | b | 24.99 | 18.01 | 12.92 | 500 | .3525 | 21-27 |
| C | c | 28.43 | 22.56 | 13.4 | 450 | .3437 | 20-24 |
| D | d | 28.95 | 18.43 | 14.28 | 500 | .3058 | n.a. |
| E | e | 33.0 | 18.09 | 13.86 | 500 | .3058 | 19-23 |
| F | f | 21.07 | 18.12 | 12.8 | 500 | .2226 | 22-26 |
| G | g | 40.52 | 18.07 | 11.89 | 500 | .3250 | 19-24 |
| H | h | (x) | (x) | 10.9 | 500 | .3471 | 15-25 |
| I | i | 5.97 | 5.10 | 13.66 | 500 | .3453 | 17-24 |

* (a) ethanediol; (b) 1,3-propanediol; (c) 1,4-butanediol; (d) 1,5-pentanediol; (e) 1,6-hexanediol; (f) diethylene glycol; (g) di-isopropylene glycol; (h) glycerine; (i) water

x Added 38.76 g of a mixture of 55.71 g of glycerine and 44.29 g of S2

n.a. Not available

EXAMPLE 11

The catalyst compositions of Example 10, Runs A to H, were used to polymerize ethylene oxide (Runs A to H, respectively, of this Example 11) using the procedure basically similar to that described in Example 4. The catalysts of Runs A to F formed polyethylene oxide. The best results were

achieved using the catalyst prepared with 1,4-butanediol, followed by the catalyst prepared using diethylene glycol. The dispersions of Runs G, H and I of Table VII did not polymerize ethylene oxide even after repeated additions thereof to the reactor; for this reason they do not appear in Table VIII, which summarizes the polymerization data of this example.

TABLE VIII

| Run | Catalyst Charged g at. Zn | Induction Period min. | Rate * | Yield g | Initial Viscosity cps |
|---|---|---|---|---|---|
| A | 0.02[b] | -- | 6,000 | n.a. | n.a. |
| B | 0.02[b] | 91 | 2,450 | 31.3 | 510 |
| C | 0.003 | 16 | 150,000 | 40.0 | 3,345 |
| D | 0.016[b] | 117 | 4,700 | 45.9 | 915 |
| E | 0.04[b] | 76 | 200 | 27.1 | n.a. |
| F | 0.004 | 18 | 16,000 | 33.1 | 1,300 |

a Calculated based on syringed value
b Catalyst added in two portions
* g PEO/hr-g at. Zn
n.a. not available

EXAMPLE 12

Different sources of fumed silica were evaluated for the preparation of the catalyst dispersion. Regardless of the source very active catalysts were produced that were stable, white, fine dispersions. The procedure was basically similar to that described in Example 3 using surfactant S1 (NP-10). The diethylzinc was added as

0239973

an approximately 25 weight percent solution in hexane. The data is summarized in Table IX.

TABLE IX

| Run | Polyol * | Polyol g | Surfactant g | 1,4-Butanediol | Hexane ml | $(C_2H_5)_2Zn$ mole | Temp. °C |
|---|---|---|---|---|---|---|---|
| A | a | 46.5 | 101.65 | 73.11 | 2,000 | 1.2271 | 17-21 |
| B | b | 14.76 | 24.99 | 17.97 | 500 | 0.2955 | 20-35 |
| C | c | 13.0 | 25.41 | 8.31 | 500 | 0.3090 | 19-23 |
| D | d | 12.39 | 25.64 | 17.91 | 500 | 0.3251 | 17-20 |

* (a) Degussa Aerosil-380[R]
(b) Degussa Aerosil-130[R]
(c) Cabot Cab-O-Sil EH-5[R]
(d) PQ Corp. PQ-CD-2040[R]

EXAMPLE 13

The catalysts produced in Example 12, Runs A to D, were used to polymerize ethylene oxide (Runs A to D, respectively, of this Example 13) following the procedure basically similar to that described in Example 4. In all instances they were highly active and showed high polymerization rates. The polyethylene oxide was a white powder. The data is summarized in Table X.

TABLE X

| Run | Catalyst Charged g at. Zn | Induction Period min. | Rate * | Yield g | Initial Viscosity cps |
|---|---|---|---|---|---|
| A | 0.003 | 19 | 162,000 | 43.9 | 3,930 |
| B | 0.003 | 14 | 118,000 | 43.4 | 1,295 |
| C | 0.003 | 9 | 151,000 | 41.0 | 3,205 |
| D | 0.003 | 8 | 113,000 | 41.3 | 2,670 |

a Calculated based on syringed value
* g PEO/hr-g at. Zn

EXAMPLE 14

The effect of a change in ratio of polyol to surfactant was examined. This did not appear to significantly affect the polymerization rate. However, it was found that total exclusion of the surfactant gives a catalyst dispersion that did not polymerize ethylene oxide (Runs D and $D^1$ in Table XII). The basic procedures of Example 3 was used to produce the catalyst and of Example 4 to produce the polymer. The diethylzinc was added as an approximately 25 weight percent solution in hexane. The data are summarized in Tables XI and XII, respectively.

TABLE XI
(Catalyst Preparation)

| Run | Silica Used g | 1,4-Butanediol g (X) | Surfactant (NP-4) g (Y) | Wt. Ratio X:Y | Hexane ml | $(C_2H_5)_2Zn$ mole | Temp. •C |
|---|---|---|---|---|---|---|---|
| A | 44.5 | b | b | 2.7 | 2,000 | 1.1673 | 18-23 |
| B | 13.56 | c | c | 5.3 | 500 | 0.2690 | 23-31 |
| C | 12.6 | d | d | 10.0 | 500 | 0.4487 | 23-28 |
| D | 11.9 | 28.49 | 0 | - | 450 | 0.3275 | 23-29 |

TABLE XII
(Polymerization)

| Run | Catalyst Charged g at. Zn | Induction Period min. | Rate * | Yield g | Initial Viscosity cps |
|---|---|---|---|---|---|
| A | 0.003 | 57 | 157,000 | 41.9 | 1,850 |
| B | 0.003 | 130 | 154,000 | 41.1 | 2,965 |
| C | 0.003 | 150 | 75,000 | 48.9 | 4,080 |
| D | 0.005 | -- | 0 | | - |
| D[1] | 0.01 | -- | 0 | | - |

a Calculated based on syringed value

b In Run A 138.9 g of a mixture containing 103.58 g of 1,4-butanediol and 41.38 g of surfactant S2 was added to the reactor

c In Run B 27.28 g of a mixture containing 24.24 g of 1,4-butanediol and 4.6 g of 52 was added to the reactor

d In Run C 43.53 g of a mixture containing 41.20 g of 1,4-butanediol and 4.12 g of S2 was added to the reactor

* g PEO/hr-g at. Zn

EXAMPLE 15

The storage stability of the catalyst dispersions of Runs J and M of Example 3 was tested by periodic evaluation for catalytic activity. It was concluded that the dispersions are stable to long-term storage in the absence of air and moisture. These evaluations were conducted by using the basic polymerization process described in Example 4; catalyst activity was determined by measuring the polymerization rate (g PEO/hr-g at. Zn). These rates and the storage periods are summarized in Table XIII.

TABLE XIII

| Catalyst | | | | | |
|---|---|---|---|---|---|
| Run J, Example 3 | | | Run M, Example 3 | | |
| Run | Days Stored | Rate | Run | Days Stored | Rate |
| A | 1 | 150,000 | A | 7 | 50,000 |
| B | 8 | 135,000 | B | 48 | 56,000 |
| C | 12 | 135,000 | C | 62 | 68,000 |
| D | 19 | 169,000 | | | |
| E | 45 | 131,000 | | | |
| F | 75 | 150,000 | | | |
| G | 106 | 172,000 | | | |

EXAMPLE 16

A series of catalyst dispersions using a variety of different fumed metal oxides was prepared following the procedure basically similar to that described in Example 3. These dispersions, however,

were not effective as catalysts for the commercial polymerization of ethylene oxide as were the catalyst dispersions produced using fumed silica as the dispersion aid. The data is summarized in Table XIV. The fumed alumina produced a stable, white, fine dispersion. However, the dispersion obtained from the fumed titania was not adequately stable and collapsed to a rubbery mass before the addition of the zinc compound.

TABLE XIV

| Run | A<br>Alumina | B<br>Titania |
|---|---|---|
| Fumed metal oxide, g | 15.63 | 13.30 |
| 1,4-Butanediol, g | 25.97 | 31.83 |
| Surfactant, g (NP-4) | 15.36 | 13.85 |
| Hexane, mole | 500 | 500 |
| $(C_2H_5)_2Zn$, mole | .3212 | --- |
| Temp., °C | 20-27 | |

The dispersion from Run A was used to polymerize ethylene oxide by a procedure as basically described in Example 3 using 0.006 gram atom of zinc in the catalyst dispersion used. A yield of 40.9 g of polyethylene oxide was produced having a solution viscosity of 8,500 at a rate of 11,250 g PEO/hr-g at. Zn.

EXAMPLE 17

A laboratory fluidized bed reactor was set up comprising a glass tube 2.5 cm in diameter by 60 cm long equipped with fritted glass on the bottom

and an inlet below the fritted glass. It was partially filled with 1.96 g of dry, finely powdered, nitrogen purged polyethylene oxide and 0.009 g of the dry catalyst powder produced in Example 3B suspended therein. The preparation of the catalyst-resin suspension and the packing were performed under an inert gas atmosphere and in the absence of moisture. The top of the reactor was capped with glass wool. A mixture of ethylene oxide and nitrogen was introduced through the bottom to fluidize the bed and react. The temperature was not permitted to rise above 14°C. Within about 30 minutes an 89 percent weight gain of free-flowing polyethylene oxide powder occurred in the reactor. The polymer was produced at a rate of 655 g PEO/hr-g at. Zn and it was of high molecular weight. In another experiment, the contents of the reactor eventually fused due to insufficient heat transfer.

EXAMPLE 18

To a 22 liter, four-necked, round-bottom glass reactor, equipped with an addition funnel, dry-ice condenser and a variable speed, three-inch paddle stirrer, sitting in a cooling bath there were added 405 g of fumed silica (Aerosil-380®), 9,030 g of a $C_{13}$ aliphatic hydrocarbon as the liquid medium, 320 g of surfactant (NP-4) and 947 g of 1,4-butanediol in the indicated sequence. During the addition and for 1.5 hours after the addition was completed, the system was purged with clean, dry nitrogen. Ice was now added to the cooling bath and a 25 weight percent diethylzinc/hexane solution (11.6262 moles diethylzinc) was rapidly added over a

38-minutes period. There was a vigorous evolution of ethane gas and a strong exotherm. The temperature was controlled at 25°C to 31°C. The catalyst dispersion was stirred overnight, under nitrogen, at room temperature. The following day it was warmed and stirred at 46°C to 51°C for 5 hours. About 17 liters of fine, white catalyst dispersion was obtained.

A 0.004 mole zinc portion of this catalyst was added to an approximately 11 weight percent ethylene oxide solution in hexane at 60°C using equipment and procedure as described in Example 1. After an induction period of 93 minutes the polymerization proceeded at a rate of 28,100 g PEO/hr-g at. Zn to yield 42.1 g of high molecular weight polyethylene oxide.

EXAMPLE 19

A 5-liter round-bottom glass reactor equipped as described in Example 18 was charged with 38.2 g of fumed silica (Aerosil-380®), 1,889 g of hexane, 39 g of surfactant (NP-4) and 107.4 g of 1,4-butanediol in the indicated sequence and stirred for 3 hours under nitrogen at room temperature. Then a 25 weight percent diethylzinc/hexane solution (1.314 moles diethylzinc) was added in five minutes with good cooling and stirring. After standing overnight at room temperature, the reaction product was warmed and stirred at 50°C to 60°C for 1.5 hours. About 750 ml of this dispersion was removed and labeled Catalyst A.

Twenty-five ml of liquid ethylene oxide was added to the remaining dispersion in the reactor and

polymerized at 25°C to 30°C. This was labeled Catalyst B.

CATALYST SAMPLE A

A polymerization reaction similar to that described in Example 18 was carried out with the following modifications. To the 500 ml of hexane in the reactor, 50 ml of liquid ethylene oxide was added at 30°C and the system was allowed to equilibrate. This resulted in an about 11 weight percent solution of ethylene oxide in the hexane. To this was added 0.003 mole zinc of Catalyst A dispersion. After an induction period of 86 minutes, polymerization occurred at the rate of 68,200 g PEO/hr-g at. Zn. Yield was about 40 g.

CATALYST SAMPLE B

A 5-liter polymerization reactor equipped with stirrer, thermometer, cooling bath and dry-ice condenser was charged with 500 ml of dry hexane followed by about 33 g of liquid ethylene oxide. Then, at 30°C, 0.006 mole zinc of Catalyst B dispersion was added; the polymerization started within 17 minutes. The initial rate of polymerization was 24,800 g PEO/hr-g at. Zn. Subsequently liquid ethylene oxide and also hexane were fed to the reactor at such a rate that there was a slow reflux at a reaction temperature of 30°C, with external cooling. Over a 6.5 hour period, 2 liters of hexane, along with an appropriate amount of ethylene oxide were added. Then the reaction was terminated by addition of 10 ml of isopropanol, the

polyethylene oxide filtered and dried, yield was 570 g. The overall rate of polymer formation was:

$$\frac{570}{(6.5)(0.006)} = 14{,}600 \text{ g PEO/hr-g at. Zn}$$

The efficiency of zinc catalyst utilization at the time the polymerization was stopped was:

$$\frac{570}{(0.006)(65)} = 1{,}462 \text{ g PEO/g at. Zn}$$

The viscosity of the polymer was 11,000 cps.

A similar run using 0.0133 mole zinc Catalyst B had a three-minute induction period, an initial rate of 24,100 g PEO/hr-g at. Zn, an overall rate of 16,500 g PEO/hr-g at. Zn and an efficiency of 1,560 g PEO/g at. Zn.

In all instances high molecular weight polyethylene oxide was produced.

## EXAMPLE 20

This copolymerization reaction was carried out in the 5 l. reactor described in Example 19-B except that a 250 ml. addition funnel was added from which polymerization grade propylene oxide could be added at will. To the reactor was added 1,500 ml. hexene and enough ethylene oxide to yield an approximately 9 wt. % solution at 30° as well as 3.5 g. propylene oxide. Then 0.007 mole of zinc alkoxide catalyst (Example 3, Run M) was added. After an induction period of 28 minutes the polymerization commenced. After 4 hours of polymerization, during which both ethylene oxide (870 g.) and propylene oxide (10 g.) were gradually and constantly added, the reaction was terminated with 10 ml. of n-propanol. Workup recovered 790 g.

of a solid copolymer with a viscosity of 3,350 cps. (1%, water). The polymerization rate was 28,200 g. polymer/hr-g at. Zn.

EXAMPLE 21

A reaction similar to Example 20 was run. Into 2,500 ml. hexane 50 g. of propylene oxide was added and the solution was brought to about 3 wt. % ethylene oxide. Then 0.007 mole zinc alkoxide catalyst (Example 3, Run F) was added. After an induction period of 147 minutes the polymerization commenced. Both ethylene oxide and propylene oxide were added during a 2.1 hr. polymerization period. Work-up yielded 102 g. of a tacky copolymer which had a 1% solution viscosity of 3,220 cps. The random copolymer contained 90.3 wt. % of ethylene oxide and 9.7 wt. % of propylene oxide. The rate was 6,740 g. polymer/hr-g at. Zn. The efficiency was 224 g. polymer/g. zinc.

EXAMPLE 22

The experiment was run in the same manner as Example 21 except that less propylene oxide was added during the polymerization reaction. The amount of zinc-alkoxide catalyst added was 0.007 mole (same catalyst as in Example 3, Run F) and the polymerization took 1.75 hr. The copolymer (275.1 g.) had a 1% solution viscosity of 8,900 cps; the rate was 22,400 g. copolymer/hr-g. at Zn and the efficiency 604 g. copolymer/g. zinc. The random copolymer contained 97.1 wt. % of ethylene oxide and 2.9 wt. % of propylene oxide.

EXAMPLE 23

Into 500 ml. hexane was added about 9 g. of propylene oxide and 0.011 mole of zinc alkoxide catalyst (Example 3, Run J). During 1.5 hrs. of polymerization, during which propylene oxide was constantly added, 36.9 g. of a viscous, sticky polymer was made.

COMPARATIVE EXPERIMENT A

For comparison purposes a group of experiments was carried out following the procedures described in Japan 45-07751 and Japan 78-27319 with minor variations. These patents produce a catalyst in the absence of any silica or other dispersion aid. The catalyst was prepared by initially adding neat ethylene glycol to a solution of diethylzinc in an inert hydrocarbon, at a ratio of 1.5 mole glycol per mole of zinc compound. After this initial reaction was completed, neat ethanol was added, 0.5 mole per mole of zinc compound, and the reaction stirred. These produced white suspensions that polymerized ethylene oxide at rates of from 2,000 to 4,000 g PEO/hr-g at. Zn. The catalysts were of variable quality and showed induction periods as long as 180 minutes.

In an attempt to resolve these problems, a further series of experiments was carried out in which a number of changes were made; the catalysts were produced following procedures basically similar to those used by applicant in producing the new catalyst compositions of his invention. It is to be remembered that the catalysts disclosed in the Japanese patents contain no silica and therefore no

silica was used in this series. In this series the following changes were made in the catalyst preparation over that which is described in the Japanese patents: (1) 1,4-butanediol was used in place of ethylene glycol; it has a lower viscosity and appeared to disperse more readily in the hexane inert medium; (2) the monoethyl ether of diethylene glycol was used to replace the ethanol. White suspensions were obtained that on examination at 10,000 times magnification showed agglomerations of spheres, each sphere averaging about 0.5 micron to 1 micron in size. The data and results are summarized in Table XV.

In Runs A to D, very slow addition of the 1,4-butanediol followed by very slow addition of ethylene glycol to the hexane solution of diethylzinc at temperatures of about 65°C and about 75°C was employed. The catalyst suspensions obtained polymerized ethylene oxide at rates of from about 6,600 to about 9,100 g PEO/hr-g at. Zn.

In Runs E and F, following the same order of addition, but at a fast rate of addition and at temperatures of about 40°C and 61°C, the polymerization rates increased considerably to about 12,000 g PEO/hr-g at. Zn.

Runs G to I were carried out at about 43°C, using a fast addition of the hydroxyl compounds but reversing the order of their addition, the ethylene glycol was initially added and followed by the 1,4-butanediol. This procedure increased the rate to as high as 19,400 g PEO/hr-g at. Zn.

In Runs J to O, a mixture of 1,4-butanediol and ethylene glycol was added at a fast rate at

about 43°C. This procedure seemed to result in catalysts of variable but fairly consistent activity and short induction periods.

Though these suspensions catalyzed the polymerization of ethylene oxide, the rates they achieved never achieved the higher rates that are obtainable by the dispersions of the instant invention, nor were the particle sizes as small.

TABLE XV

| Run | Butane-diol g | MEG g | $(C_2H_5)_2Zn$ Mole** | Temp °C | Induction Period min. | Rate * | Yield g |
|---|---|---|---|---|---|---|---|
| A | 1.59 | 1.09 | .0216 | 76 | 12 | 8,900 | 42.2 |
| B | 1.39 | 1.39 | .0218 | 74 | 12 | 6,600 | 37.4 |
| C | 1.49 | 1.22 | .0211 | 65 | 11 | 9,100 | 41.9 |
| D | 1.42 | 1.44 | .0208 | 65 | 15 | 8,100 | 41.1 |
| E | 1.57 | 1.37 | .0225 | 61 | 5 | 12,000 | 43.0 |
| F | 1.64 | 1.34 | .0231 | 40 | 11 | 11,800 | 42.0 |
| G | 1.58 | 1.66 | .0237 | 43 | 4 | 14,200 | 42.2 |
| H | 1.60 | 1.68 | .0233 | 43 | 3 | 19,400 | 44.3 |
| I | 1.40 | 1.48 | .0212 | 43 | 5 | 10,600 | 42.3 |
| J | 1.52 | 1.49 | .0222 | 43 | 3 | 12,200 | n.a. |
| K | 1.59 | 1.50 | .0227 | 43 | 3 | 14,900 | n.a. |
| L | 1.46 | 1.46 | .0213 | 43 | 1 | 8,000 | 41.8 |
| M | 1.45 | 1.45 | .0210 | 43 | 5 | 16,100 | 43.3 |
| N | 1.41 | 1.42 | .02150 | 43 | 5 | 16,500 | 42.9 |
| O | 1.40 | 1.39 | .0206 | 43 | 2 | 10,900 | 42.0 |

* g PEO/hr-g at. Zn
** As an about 25 weight percent solution in hexane.
MEG = monoethyl ether of diethylene glycol.
n.a. = not available

COMPARATIVE EXPERIMENT B

To a mixture of about 11 weight percent ethylene oxide in 500 ml of hexane in a reactor as described in Example 19, Catalyst Sample A, a calcium amide-type catalyst, as prepared in Example 3 of U.S. Patent No. 4,193,892, was added (0.007 g atom calcium was used in this reaction). The polymerization reaction commenced at once and proceeded at 30°C at the rate of 19,600 g PEO/hr-g at. Zn to yield about 40 g of polymer. This high molecular weight polymer had a strong odor of ammonia and diethyl amide.

COMPARATIVE EXPERIMENT C

This polymerization was carried out in the equipment described in Example 19, Catalyst Sample B, with continuous ethylene oxide addition as therein. An approximately 10 weight percent ethylene oxide in hexane (3.5 liters) solution was prepared and 0.008 mole of the same calcium amide catalyst used in Comparative Experiment B was added. The polymerization reaction proceeded immediately and ethylene oxide was added as needed for 5.3 hours while maintaining the temperature at 30°C with external cooling. The yield of polyethylene oxide was 930 g and it had a 1 percent solution viscosity of 18,360 cps. The overall polymerization rate was 21,600 g PEO/hr-g at Zn and the efficiency was 2,900 g PEO/hr-g calcium. The polymer had a strong ammonia and diethyl amide odor.

An experiment was carried out using a gel-type silica (PQ-CD-2040, The PQ Corporation). The silica was dried at 200°C for 4 days and then reacted using equipment and the process basically as described in Example 3. The reactor was charged with 500 ml. of hexane and 12.39 g. of the dried silica, stirred and 25.64 g. of 1,4-butanediol was added. A lumpy mixture resulted rather than a fine dispersion. To this was added 17.91 g. of surfactant (NP-10®) and the mixture was stirred at room temperature for one hour. A poor dispersion with many lumps and particles on the reactor bottom resulted. Then 0.3119 mole of a 25 weight percent diethylzinc-hexane solution was added over a 4 minute period at 17°C to 20°C with good stirring. No vigorous exothermic reaction was observed; the reaction temperature rose very gradually to 28°C and there was a very slow evolution of ethane. The mixture was stirred overnight at room temperature. The following day a poor dispersion was found and the reactor wall was coated with white material. When evaluated as a polymerization catalyst it nevertheless polymerized ethylene oxide at a high rate.

CLAIMS

1. A process for producing a dispersion comprising reacting a hydrocarbyl compound of the general formula RxM wherein

R is (i) an alkyl group containing from 1 to about 8 carbon atoms; or

(ii) an unsubstituted or alkyl-substituted phenyl or naphthyl group; or

(iii) a cycloalkyl group having from 4 to 6 ring carbon atoms; or

(iv) a dicyclopentadienyl group;

M is zinc or aluminum; and

x is the valence of M

with a linear alkane polyol having from 2 to about 6 carbon atoms in the alkane chain or a cycloalkane diol having 5 to 6 ring carbon atoms in contact with a member of the group of fine particle metal oxides of silica, magnesia and alumina as dispersion aid and nonionic surfactant in an inert medium.

2. A process as claimed in claim 1 wherein the dispersion aid is fumed magnesia, fumed alumina or fumed titania.

3. A process as claimed in one or both of the claims 1-2 wherein the average particle size of the dispersion aid is less than 10 nm.

4. A process for producing a catalyst comprising reacting a zinc compound of the general formula $R_2Zn$ wherein R is

(i) an alkyl group containing from 1 to about 8 carbon atoms; or

(ii) an unsubstituted or alkyl-substituted phenyl or naphthyl group; or

(iii) a cycloalkyl group having from 4 to 6 ring carbon atoms; or

(iv) a dicyclopentadienyl group

with a linear alkane polyol having from 2 to about 6 carbon atoms in the alkane chain, or a cycloalkane diol having 5 or 6 ring carbon atoms in contact with fumed silica dispersion aid and nonionic surfactant in an inert medium.

5. A process as claimed in claim 4 wherein the reaction temperature is from about 0°C up to the autogenous boiling point of the reaction mixture, e.g. from about 0°C to about 40°C.

6. A process as claimed in one or both of the claims 4-5 wherein the average particle size of the fumed silica is less than about 10 nm.

7. A process as claimed in claim 6 wherein the fumed silica has a surface area of from about 10 to about 600 $m^2/g$ BET/$N_2$.

8. A process as claimed in one or more of the claims 4-7 wherein the inert medium is a hydrocarbon, e.g. hexane or isopentane.

9. A process as claimed in one or more of the claims 4-8 wherein the surfactant is selected from the group consisting of

(i) 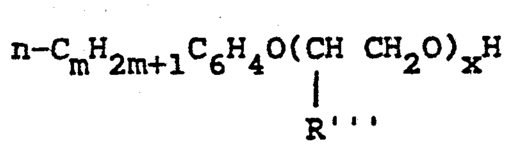 ;

(ii) 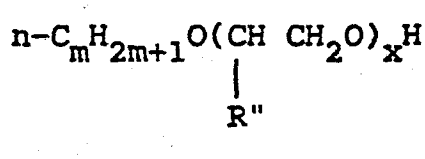 ;

(iii) $(n\text{-}C_mH_{2m+1})_2NH$ ; or

(iv) 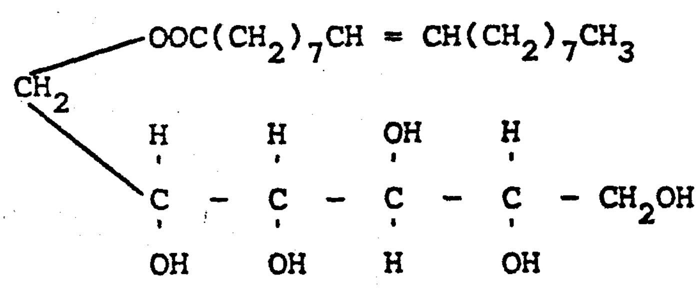

wherein x is 2-20; m is from 4 to 18; y is from 12 to 20 and R" is hydrogen or alkyl of at least 1 carbon atom, the surfactant being e.g. the 4-mole ethylene oxide adduct of n-nonylphenol, the 10-mole ethylene oxide adduct of n-nonylphenol, di-n-octylamine or

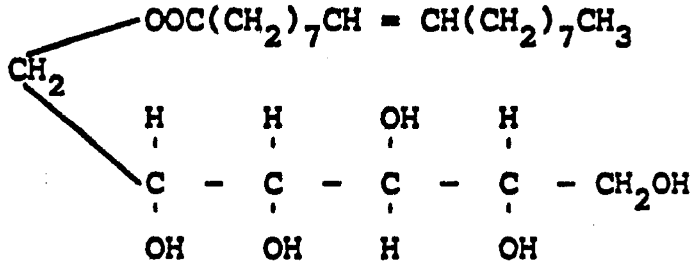

10. A process as claimed in one or more of the claims 4-9 wherein the zinc compound is diethylzinc.

11. A process as claimed in one or more of the claims 4-10 wherein the alkanediol is 1,4-butanediol, diethylene glycol, 1,6-hexanediol or ethanediol.

12. A composition comprising the reaction product obtained by the process of one or more of the claims 1-3.

13. A composition comprising the reaction product obtained by the process of one or more of the claims 4-11.

14. A composition as claimed in claim 13 in the form of a dispersion or in the form of a dry powder or shaped article.

15. A composition as claimed in one or more of the claims 13-14 wherein the zinc compound is diethylzinc.

16. A composition as claimed in one or more of the claims 13-15 wherein the alkanediol is 1,4-butanediol.

17. A composition as claimed in one or more of the claims 13-14 wherein the alkanediol is diethylene glycol.

18. A process for producing polyalkylene oxides comprising contacting cyclic oxide of the formula

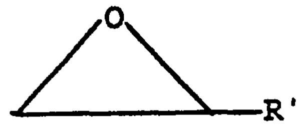

wherein R' is hydrogen or methyl with a catalytic amount of a catalyst comprising the reaction product obtained by the process of one or more of the claims 4-11 and being the reaction product of one or more of the claims 13-17 respectively

19. A process as claimed in claim 18 wherein the cyclic oxide is ethylene oxide and polyethylene oxide is produced.

20. A process as claimed in claim 18 wherein the cyclic oxide is propylene oxide and polypropylene oxide is produced.

21. A process as claimed in claim 18 wherein the cyclic oxide is ethylene oxide and propylene oxide and a copolymer is produced.

22. A process as claimed in claim 18 wherein a mixture of ethylene oxide and propylene oxide comprises the cyclic oxide.

23. A process for producing solid alkylene oxide polymers under relatively low pressure conditions which comprise polymerizing a cyclic oxide of the formula

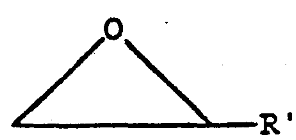

in a fluidized bed process at a temperature below the fusion temperature of the alkylene oxide polymer by contacting said

cyclic oxide with fluidized particles of a catalyst, supported on a carrier or unsupported, said catalyst comprising the dried reaction product of the process of one or more of the claims 4-11 and being the reaction product of one or more of the claims 13-17 respectively.

24. A process as claimed in claim 23 wherein the average particle size of said catalyst is less than about 10 nm.

25. A process as claimed in one or both of the claims 23-24 wherein the cyclic oxide is ethylene oxide or ethylene oxide and propylene oxide.